**Europäisches Patentamt**

**European Patent Office**

**Office européen des brevets**

(19)

(11) Veröffentlichungsnummer: **0 208 863**
**B1**

(12)

# EUROPÄISCHE PATENTSCHRIFT

(45) Veröffentlichungstag der Patentschrift:
**26.10.88**

(51) Int. Cl.⁴: **B 25 J  15/04**

(21) Anmeldenummer: **86106470.7**

(22) Anmeldetag: **13.05.86**

(54) **Werkstückhandhabungseinrichtung mit automatischem Greiferwechsel.**

(30) Priorität: **19.06.85  DE 3521821**

(43) Veröffentlichungstag der Anmeldung:
**21.01.87 Patentblatt 87/4**

(45) Bekanntmachung des Hinweises auf die Patenterteilung:
**26.10.88 Patentblatt 88/43**

(84) Benannte Vertragsstaaten:
**AT BE CH FR GB IT LI NL SE**

(56) Entgegenhaltungen:
**EP - A - 0 120 275**
**DD - A - 224 800**
**DE - A - 2 735 260**
**DE - A - 3 043 687**

(73) Patentinhaber: **Gildemeister AG, Morsestrasse 1,
D-4800 Bielefeld (DE)**

(72) Erfinder: **Kuska, Joachim, Ringstrasse 53,
D-3050 Wunstorf 1 (DE)**
Erfinder: **Schaefer, Wolfgang, Eifelweg 2,
D-3012 Langenhagen (DE)**

ACTORUM AG

## Beschreibung

Die Erfindung richtet sich auf eine Werkstückhandhabungseinrichtung mit einem an einem Tragarm angeordneten Greiferantriebsgehäuse und einem daran befestigten Greifergetriebegehäuse entsprechend dem Oberbegriff des Patentanspruchs 1.

Eine derartige Werkstückhandhabungseinrichtung ist aus DE-OS 3 043 687 bekannt. Die Greiferfinger sind über ein in einer Drehrichtung durch Federn vorgespanntes Koppelelement kinematisch miteinander verbunden. Die Öffnungsbewegung wird durch einen Stössel bewirkt, der auf das Koppelelement in bestimmten Schaltstellungen des Werkstückgreifers einwirkt, in denen der Stössel mit der Kolbenstange eines im Greiferantriebsgehäuse angeordneten, hydraulischen Linearantriebes fluchtet. Das Greifergetriebegehäuse soll gegenüber dem Greiferantriebsgehäuse in mehrere bevorzugte Schwenkstellungen schaltbar sein. Bei den dargestellten Greifern ist ausserdem der manuelle Wechsel verschiedener Greifer möglich. Ein automatischer Wechsel ist wegen der Anordnung der Antriebe nicht möglich.

Aus Industrie Anzeiger 101. Jg. Nr. 82, Seiten 29 bis 33 sind verschiedene Industrieroboter mit automatischen Greifer- und Werkzeugwechselsystemen bekannt. In Fig. 9 ist als mögliche Schnittstelle für den Greiferwechsel auch die Schnittstelle zwischen Antrieb und Greifergetriebe aufgeführt. Die ausgeführten Beispiele richten sich wegen der grösseren Flexibilität auf eine Schnittstelle zwischen Greifer und Industrieroboter. In diesen Fällen ist es erforderlich, Versorgungsleitungen beim Wechseln des Greifers ab- bzw. anzukoppeln. Dadurch wird der Aufwand für den Greiferwechsel erheblich vergrössert.

Durch den Greiferwechsel dürfen sich bei Werkstückhandhabungseinrichtungen keine Lagefehler in der Anordnung des Greifers in Bezug zum geregelt bewegten Tragarm und der Greiferfinger in Bezug zum Greifergetriebegehäuse einschleichen, weil ein derartiger Fehler zu Kollisionen des Greifers mit dem zu greifenden Werkstück, der Werkstückaufnahme oder der zu bedienenden Werkzeugmaschine führen würde.

Der Erfindung liegt die Aufgabe zugrunde, eine genaue Positionierung des gewechselten Greifers bezüglich seines Tragarms zu erreichen, wobei der Wechselvorgang einfach und sicher sowohl für den Greifer als auch für die gleichzeitige Antriebskopplung erfolgen soll.

Die Erfindung wird durch die Merkmale des Hauptanspruchs gelöst.

Durch die parallele Anordnung von Spannzapfen, Zentrierstift und Antriebsglied ist der Wechsel des Greifers durch eine blosse Linearbewegung des Tragarms der Werkstückhandhabungseinrichtung möglich.

Damit das Antriebsglied in das Koppelelement beim Greiferwechsel eindringen kann, muss das Koppelelement in einer dafür bestimmten Lage gehalten werden. Dies kann durch die Greiferhalterung geschehen, die den Greifer für den Wechselvorgang bereit hält, indem die Greiferfinger in der entsprechenden Lage festgehalten werden oder durch eine zwischen Greifergetriebegehäuse und Koppelelement angeordnete Rastvorrichtung.

Die formschlüssige Verbindung zwischen Antriebsglied und Koppelscheibe hat den Vorteil, dass die Spannfinger nie eine unkontrollierte Lage zum Greifergehäuse einnehmen können, wie dies bei einer einseitig federbelasteten Verbindung zwischen Stössel und Koppelscheibe möglich ist.

Durch die einander gegenüberliegende Anordnung zweier Spannzapfen wird auf das Greifergetriebegehäuse keine Querkraft und kein Kippmoment ausgeübt, was trotz des Passsitzes des Spannzapfens im Greiferantriebsgehäuse zu einer Verlagerung des Greifergetriebegehäuses gegenüber dem Greiferantriebsgehäuse führen könnte. Die kegeligen Ansätze der Spannbolzen sorgen in Verbindung mit den kegeligen Bohrungen im Spannzapfen dafür, dass das Greifergetriebegehäuse fest gegen die Anlagefläche des Greiferantriebsgehäuses gezogen wird.

Eine Verdrehung wird zusätzlich durch einen aussermittig angeordneten Zentrierstift verhindert. Dadurch ist die genaue, reproduzierbare Lage des Greifergetriebegehäuses und der Spannfinger gegenüber dem Tragarm der Werkstückhandhabungseinrichtung gewährleistet, wobei die bekannt einfache und kostengünstige Konstruktion des Spannfingerantriebs gewahrt werden kann.

Die Erfindung wird anhand der nachfolgenden Zeichnungen näher erläutert. Es zeigen:

Fig. 1 einen Querschnitt durch das Greifergetriebegehäuse,

Fig. 2 einen Schnitt gemäss Linie II-II der Fig. 1,

Fig. 3 einen Schnitt gemäss Linie III-III der Fig. 1.

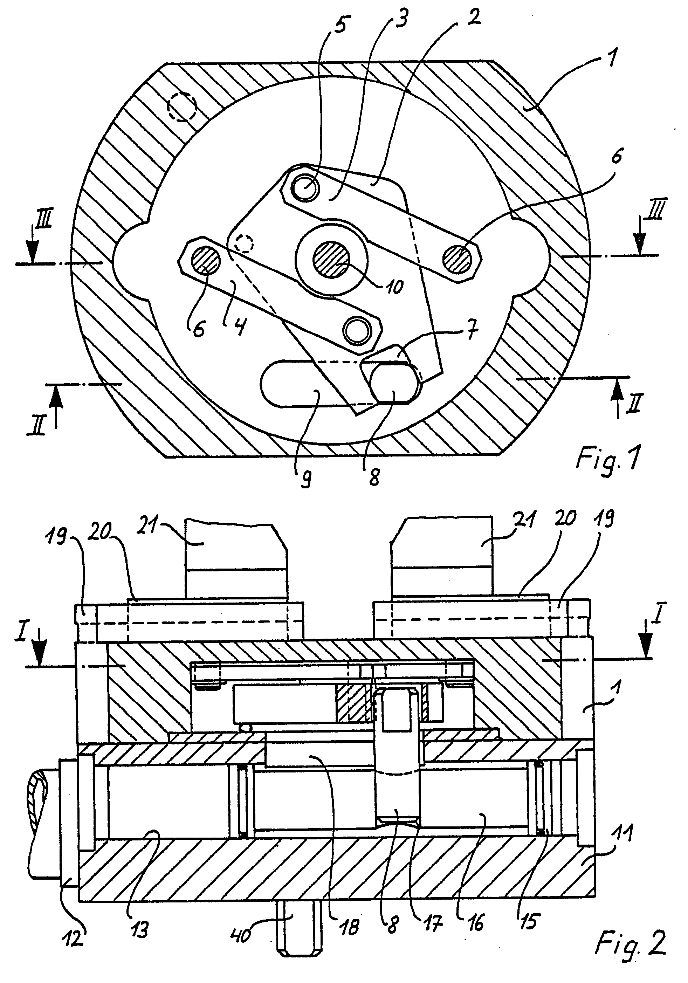

Fig. 1 zeigt das Greifergetriebe, das in einem Greifergetriebegehäuse 1 untergebracht ist und aus einer Koppelscheibe 2 und zwei Schubstangen 3, 4 besteht, die über Bolzen 5 drehbar mit der Koppelscheibe 2 verbunden sind. Die Schubstangen 3, 4 tragen an ihren gegenüberliegenden Enden Mitnehmerbolzen 6, die in die in der Fig. 1 nicht dargestellten Grundbacken 20 eingreifen. Die Koppelscheibe 2 ist mit einem Radialschlitz 7 versehen, in den ein Antriebsstift 8 eingreift, der das Greifergetriebegehäuse 1 in einem Schlitz 9 durchdringt. Die Koppelscheibe 2 ist auf einer Achse 10 drehbar gelagert.

Fig. 2 zeigt neben dem Greifergetriebegehäuse 1 das Greiferantriebsgehäuse 11, das an dem Tragarm 12 der Werkstückhandhabungseinrichtung befestigt ist. In dem Greiferantriebsgehäuse 11 ist eine Bohrung 13 vorgesehen, in der ein Kolben 15 verschoben wird.

. Die Kolbenstange 16 trägt eine Querbohrung 17, in die der Antriebsstift 8 eingefügt ist. Der Antriebsstift 8 durchdringt die Gehäusewand des Greiferantriebsgehäuses 11 in einem Schlitz 18, der dem Schlitz 9 im Greifergetriebegehäuse 1 entspricht. An dem Greifergetriebegehäuse 1 sind Führungen 19 für die Grundbacken 20 vorgesehen, an denen unterschiedliche Spannfinger 21 befestigt werden können.

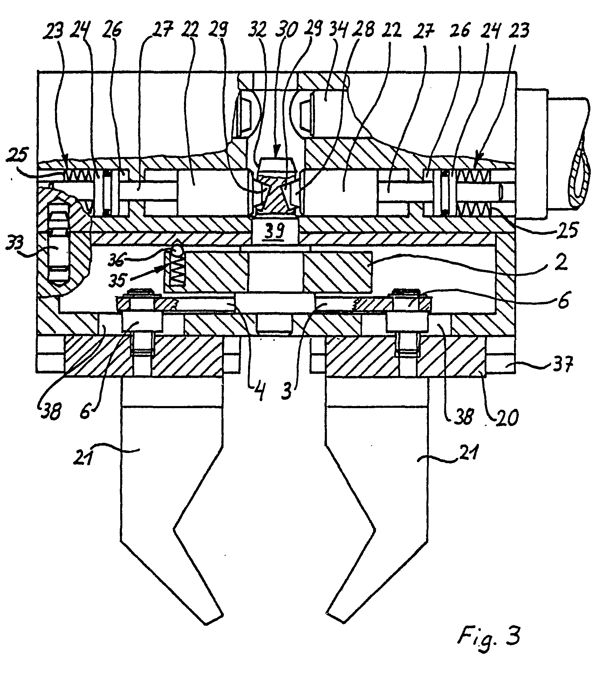

Gemäss Fig. 3 sind in dem Greiferantriebsgehäuse 11 neben dem Spannfingerantrieb auch die Spannbolzen 22 und deren Antrieb 23 untergebracht. Die Antriebe 23 für die Spannbolzen 22 bestehen aus Kolben 24, die einseitig durch Federn 25 belastet sind und durch ein dem Zylinderdruckraum 26 zuführbares Druckmedium gegen die Federkraft verschoben werden können. Die Kolbenstangen 27 der Kolben 24 sind mit den Spannbolzen 22 verbunden. Das gegenüberliegende Ende der Spannbolzen 22 ist als Kegelstumpf 28 ausgebildet und greift in Bohrungen 29 am Spannzapfen 30 ein. Der Spannzapfen 30 besitzt ausser dem Spannbereich 31 und einer Einführungsschräge 32 noch einen zylindrischen Teil 39, der in Verbindung mit einem Zentrierstift 33 für die Lagefixierung zwischen Greifergetriebegehäuse 1 und Greiferantriebsgehäuse 11 sorgt. In dem Greiferantriebsgehäuse 11 ist in Fig. 3 ein weiteres Spannbolzenpaar 34 zur Aufnahme eines zweiten, dem dargestellten gegenüberliegenden Greifers angeordnet.

Zwischen dem Greifergetriebegehäuse 1 und dem Koppelelement 2 ist der Rastmechanismus 35 in Form einer federbelasteten Kugel 36 und einer Gehäuseaussparung dargestellt. Das Koppelelement 2 ist über die Zug-Schubstangen 3 mit den Mitnehmerbolzen 6 verbunden, die in die Grundbacken 20 eingeschraubt sind. Die Grundbacken 20 sind in T-Nuten 37 geführt. Die Bewegung der Mitnehmerbolzen 6 in Führungsrichtung wird durch Längsschlitze 38 im Greifergetriebegehäuse 1 ermöglicht.

Der Greiferwechselvorgang geschieht folgendermassen:

Die Spannfinger 21 werden so weit geöffnet, dass der in der Koppelscheibe 2 angeordnete Rastmechanismus 35 im Greifergetriebegehäuse 1 einrastet. Danach wird der Greifer auf einer Greiferhalterung abgesetzt. Den Zylinderräumen 26 wird ein Druckmedium zugeführt, das die Kolben 24 gegen die Kraft der Federn 25 nach aussen verschiebt und damit die Spannbolzen 22 aus den Bohrungen 29 am Spannzapfen 30 herauszieht.

Das Greiferantriebsgehäuse 11 wird nun durch den Tragarm so weit angehoben, dass der Zentrierstift 33 und der Spannzapfen 30 vollständig aus ihren Bohrungen heraustreten. Dabei wird gleichzeitig der Antriebsstift 8 aus dem Greifergetriebegehäuse 1 und damit aus dem Koppelelement 2 herausgezogen. Der Tragarm kann nun das Greiferantriebsgehäuse 11 zu einer zweiten Greiferhalterung transportieren, wo der umgekehrte Vorgang zur Verbindung des Greiferantriebsgehäuses 11 mit einem zweiten Greifergetriebegehäuse 1' abläuft. Der Wechselvorgang ist auch dann zuverlässig möglich, wenn das Greiferantriebsgehäuse 11 nicht exakt über dem Greifergetriebegehäuse 1 positioniert wird, weil die ineinander greifenden Elemente 8, 30, 33 alle mit Einführschrägen versehen sind.

## Patentansprüche

1. Werkstückhandhabungseinrichtung mit an einem Tragarm des Handhabungssystems angebrachtem Werkstückgreifer, bestehend aus einem Greiferantriebsgehäuse (11) mit einer Antriebsquelle für die Spannbewegung der Spannfinger (21) und einem Greifergetriebegehäuse (1), wobei das Greifergetriebe aus einem über Zug-Schubstangen (3, 4) auf die Spannfinger (21) wirkenden Koppelelement besteht, gekennzeichnet durch einen das Greifergetriebegehäuse (1) gegenüber dem Greiferantriebsgehäuse (11) zentrierenden, in das letztere einführbaren Spannzapfen (30) an dem Greifergetriebegehäuse (1) mit einer Spannvorrichtung (22, 23) zur Halterung des Spannzapfens (30) in dem Greiferantriebsgehäuse (11) und durch mindestens einen das Greifergetriebegehäuse (1) gegen Verdrehung gegenüber dem Greiferantriebsgehäuse (11) sichernden, zu dem Spannzapfen (30) parallelen Zentrierstift (33), und durch ein parallel zur Spannzapfenaufnahme aus dem Greiferantriebsgehäuse (11) vorstehendes, in das Koppelelement (2) formschlüssig eingreifendes Antriebsglied (8).

2. Werkstückhandhabungseinrichtung nach Anspruch 1, dadurch gekennzeichnet, dass der Spannzapfen (30) zwei gegenüberliegende, kegelige Bohrungen (29) aufweist.

3. Werkstückhandhabungseinrichtung nach Anspruch 1 und 2, dadurch gekennzeichnet, dass die Spannvorrichtung (22, 23) durch zwei Spannbolzen (22) gebildet ist, die mit den kegeligen Bohrungen (29) gegenüberliegenden, diesen angepassten, kegeligen Ansätzen (28) versehen sind.

4. Werkstückhandhabungseinrichtung nach Anspruch 1, dadurch gekennzeichnet, dass ein das Koppelelement (2) in vorbestimmter Stellung festlegender Rastmechanismus (35) am Greifergetriebegehäuse (1) vorgesehen ist.

5. Werkstückhandhabungseinrichtung nach Anspruch 1, dadurch gekennzeichnet, dass das Antriebsglied (8) aus einem Stift besteht und das Koppelelement (2) im Bewegungsbereich des Stiftes einen Schlitz (9) von der Breite des Stiftdurchmessers aufweist.

6. Werkstückhandhabungseinrichtung nach Anspruch 1, dadurch gekennzeichnet, dass das Greiferantriebsgehäuse (11) zur Halterung von zwei Greifergetriebegehäusen (1) mit dem ersten Antriebsglied (8) gegenüberliegenden, in einer Ebene versetzt angeordneten, zweiten Antriebsglied (40), einer zweiten Zentrierbohrung und einer koaxialen zweiten Aufnahmebohrung für den zweiten Spannzapfen ausgerüstet ist.

## Claims

1. A workpiece handling device having a workpiece gripper fitted to a bearer arm of the handling system, consisting of a gripper drive housing (11) with a driving source for the clamping movement of the clamping fingers (21) and a gripper mechanism housing (1), the gripper gear consisting of a coupling member acting via connecting rods (3, 4) upon the clamping fingers (21), characterized by a clamping stud (30) of the gripper mechanism housing (1), which centres the gripper mechanism housing (1) with respect to the gripper drive housing (11) and may be introduced into the latter and has a clamping mechanism (22, 23) for mounting the clamping stud (30) in the gripper drive housing (11), and by at least one centreing pin (23) parallel with the clamping stud, which secures the gripper mechanism housing (1) against twisting with respect to the gripper drive housing (11), and by a driving member (8) which projects from the gripper drive housing (11) in parallel with the clamping stud receiver and engages with a close fit in the coupling member (2).

2. A workpiece handling device as in Claim 1, characterized in that the clamping stud (30) exhibits two tapered bores (29) lying opposite one another.

3. A workpiece handling device as in Claim 1 and 2, characterized in that the clamping mechanism (22, 23) is formed by two clamping bolts (22) which are provided with tapered extensions (28) lying opposite and fitting the tapered bores (29).

4. A workpiece handling device as in Claim 1, characterized in that a mechanism (35) is provided on the gripper mechanism housing (1) to fix the coupling member (2) in a predetermined position.

5. A workpiece handling device as in Claim 1, characterized in that the driving member (8) consists of a pin and the coupling member (2) exhibits in the range of movement of the pin a slot (9) of width equal to the pin diameter.

6. A workpiece handling device as in Claim 1, characterized in that for the mounting of two gripper mechanism housings (1) the gripper drive housing (11) is equipped with a second driving member (40) lying opposite the first driving member (8) and arranged offset in a plane, and with a second centreing bore and a second coaxial receiver bore for the second clamping stud.

**Revendications**

1. Dispositif de manipulation de pièces usinées, avec un préhenseur de pièce usinée monté sur un bras porteur du système de manipulation, constitué d'un boîtier d'entraînement (11) avec une source d'entraînement pour le mouvement de serrage des doigts de serrage (21) et d'un boîtier de transmission (1), la transmission étant constituée par un élément d'accouplement agissant sur les doigts de serrage (2) par l'intermédiaire de tiges de traction et de poussée (3, 4), caractérisé par un tenon de serrage (30) prévu sur le boîtier de transmission (1), tenon qui peut être introduit dans le boîtier d'entraînement (11) et qui centre le boîtier de transmission (1) par rapport au boîtier d'entraînement (11), avec un dispositif de serrage (22, 23) pour maintenir le tenon de serrage (30) dans le boîtier d'entraînement (11), et caractérisé également par au moins un doigt de centrage (33) parallèle au tenon de serrage (30), axe qui empêche la rotation relative du boîtier de transmission (1) par rapport au boîtier d'entraînement (11), et par un organe d'entraînement (8) faisant saillie hors du boîtier d'entraînement (11) parallèlement au logement récepteur du tenon de serrage, et s'engageant par complémentarité de forme dans l'élément d'accouplement (2).

2. Dispositif de manipulation de pièces usinées selon la revendication 1, caractérisé en ce que le tenon de serrage (30) présente deux alésages coniques (29) en vis-à-vis.

3. Dispositif de manipulation de pièces usinées selon la revendication 1 ou 2, caractérisé en ce que le dispositif de serrage (22, 23) est constitué de deux doigts de serrage (22) qui sont munis de parties rapportées coniques (28) situées en vis-à-vis des alésages coniques (29) et adaptées à ces derniers.

4. Dispositif de manipulation de pièces usinées selon la revendication 1, caractérisé en ce qu'il est prévu sur le boîtier de transmission (1) un mécanisme de crantage (35) fixant l'élément d'accouplement (2) dans une position prédéterminée.

5. Dispositif de manipulation de pièces usinées selon la revendication 1, caractérisé en ce que l'organe d'entraînement (8) consiste en un axe et en ce que l'élément d'accouplement (2) présente dans la plage de déplacement de l'axe une fente (9) de largeur égale au diamètre de l'axe.

6. Dispositif de manipulation de pièces usinées selon la revendication 1, caractérisé en ce que le boîtier d'entraînement (11) est, en vue du maintien de deux boîtiers de transmission (1), équipé d'un deuxième organe d'entraînement (40) disposé en déport dans un même plan et en vis-à-vis du premier organe d'entraînement (8), ainsi que d'un deuxième alésage de centrage et d'un deuxième alésage récepteur coaxial pour le deuxième tenon de serrage.

0 208 863

Fig. 1

Fig. 2

Fig. 3